# EUROPEAN PATENT SPECIFICATION

(11) **EP 0 428 588 B1**
(45) Date of publication and mention of the grant of the patent: **27.10.1993**
(21) Application number: 89909123.5
(22) Date of filing: 04.08.1989
(51) Int. Cl.: B23K 26/00

(54) **MANUFACTURE OF FINELY PERFORATED SHEET MATERIAL**
HERSTELLUNG EINES FEIN PERFORIERTEN MATERIALS
FABRICATION D'UN MATERIAU EN FEUILLE A MINCES PERFORATIONS

(30) Priority: 04.08.1988 AU 9745/88
(43) Date of publication of application: 29.05.1991
(73) Proprietor: COMMONWEALTH SCIENTIFIC AND INDUSTRIAL RESEARCH ORGANISATION, Campbell, ACT 2601 (AU)
(72) Inventor: BRANDT, Milan, Cherrybrook, NSW 2120 (AU); CRANE, Kenneth, Cecil, Allan, West Pymble, NSW 2073 (AU)
(74) Representative: MacGregor, Gordon
(86) International application number: AU8900336
(87) International publication number: WO9001393

(56) References cited:
- CA-A- 1 138 936
- DE-A- 2 423 750
- FR-A- 2 414 384
- GB-A- 1 235 653
- US-A- 3 226 527
- US-A- 3 828 159
- US-A- 3 981 230
- US-A- 4 458 133
- PATENT ABSTRACTS OF JAPAN vol. 12, no. 137 (M-690)(2984) 26 April 1988, & JP-A-62 259686 (TOSHIBA CORP) 12 November 1987,
- PATENT ABSTRACTS OF JAPAN, M-609,& JP-A-6240985 (NIPPEI TOYAMA CORP.). 21.2.87

## Description

This invention relates to a method of perforating a sheet material according to the preamble of claim 1. Such a method is known from JP-A-62-40985.
The method of the invention is particularly useful in the production of finely perforated sheets, for example screens or sieves used in centrifugal separators or filters. It includes the manufacture of sheet materials in which many fine perforations are involved, particularly if one side of the sheet as perforated is required to be smooth and the lips of the perforation at that side are required to be fairly sharp. For example, the invention has applications to the production of separating screens for use in so-called centrifugals used in sugar production for the separation of sugar crystals from massecuite sugar syrup, and will be described here in that context. It is to be understood, however, that the invention is in no way limited to that particular application. Other applications include sieve bend screens used in the food processing and mineral processing industries.

A screen typical of those presently employed in the sugar industry is formed from a number of sections each in the shape of a segment of an annulus, which together form a frusto-conical screen when supported within the centrifugal by means of a supporting basket or mesh. The screens are between 200 and 350 microns thick, and are conventionally formed by the electrodeposition of nickel with the use of a metal matrix master to define the slots through which the molasses passes from the centrifugal. These slots are typically 60 microns wide and 2000 microns long on the working side of the screen, and have sides which taper outwardly to larger dimensions on the outer side of the screen from which the molasses exits, to reduce the incidence of blockage of the slots by sugar crystals.

The slots are distributed uniformly over the surface of the screen, and are provided in various spacings to give open areas of between 6% and 15% of the area of the working side of the screen. The total area of such a screen is typically 1.2m for which an open area of 8% requires 800,000 slots. In the case of screens presently employed a layer of chromium 15 to 20 microns thick is applied to provide a surface which has sufficient hardness and resistance to corrosion.

The useful life of such screens is limited by the gradual enlargement of the slots which occurs due to corrosion and erosion. The principle mechanism involved has been identified as arising from cracks in the chromium coating, which allow the hot molasses into regions between the chromium and the nickel. This leads to galvanic corrosion, eventually resulting in pitting of the nickel and flaking of the chromium. Once the softer nickel is exposed, it erodes or corrodes quickly, and the slot width increases. Increasing slot width significantly decreases the separation efficiency of the screen, which eventually must be replaced. The useful working life of such screens in continous centrifugals may be approximately six weeks.

The tensile strength of these screens must be sufficient to avoid stretching of the screen and its deformation into the gaps in the supporting basket. Such deformation may cause an increase in the size of the slots, and will also create resistance to the flow of material along the working surface of the screen.

It is important that the inner or working surface of the screen should be smooth in the immediate vicinity of the slots, and this must be taken into account in the choice of production method.

As mentioned, such screens or other sheet materials with fine perforations may be produced by an electrodeposition technique. Alternative techniques include mechanical punching, chemical etching (also known as photochemical machining), electrochemical machining, electrodischarge machining, and the use of focussed electron beams or laser beams. The most appropriate method for a particular application depends on many complex factors, but it is significant that the use of a laser has some generally-accepted advantages. The perforation of sheet materials by laser beams is a common practice in manufacturing industries throughout the world. Advantages of this approach include the ability to form very small perforations (holes with diameters of 60 microns are not uncommon), the good compatibility with computer-numerical-control (CNC) equipment for moving the workpiece sheet or the beam, the lack of tool wear, and the applicability to a wide range of materials (both metallic and non-metallic). The use of a laser enables perforations with a larger ratio of depth to width than those practicable with chemical etching, and consequently the use of a laser is not restricted to the production of very thin perforated sheets.

However, lasers have not been widely used to produce sheet materials in which a large number of fine perforations are required. Some screens or products similar to screens which have involved a laser manufacturing technique have been reported. The present invention involves a manufacturing technique which enables perforations of high quality to be produced, and which in many cases is expected to be more economical than alternative laser techniques. Particularly in the case of thin sheet materials (e.g. steel less than 1mm thick) it enables very severe problems usually associated with the use of a laser perforation technique to be overcome. These problems will become evident in the description below.

It is known to provide backers for supporting workpieces during laser cutting. JP-A-62-40985 discloses a method of cutting a sheet material, wherein the sheet is supported by, but not fixed to, a plurality of supporting plates while the sheet material is cut by a laser beam. DE-A-2423750 discloses a method of perforating a sheet of material with a laser beam, wherein the sheet is held against a porous glass support during perforation by a vacuum which is applied through the support plate and to the sheet. EP-A-13657 discloses a method of perforating a workpiece using a laser beam, wherein the workpiece is held in intimate contact with a backing member during perforation. The backer is made from epoxy resin which is applied in its unhardened form in intimate contact with the workpiece and then hardened. After drilling is completed the backer is removed from the workpiece by disintegration so that a new backer must be used with each new workpiece.

### SUMMARY OF THE INVENTION

A method is described which enables screens to be made from materials which combine adequate strength and hardness with corrosion resistance, such as stainless steel or titanium. Stainless steel cannot be electrodeposited, and electrodeposition of the titanium is expensive, so a method has been sought which will enable the perforations to be produced in a sheet of the material by some form of cutting, drilling or punching. Laser drilling or laser cutting may be used for this purpose.

A major problem to be overcome in the successful use of laser drilling and cutting for the production of perforations having the geometry described above and traditional for fugal screens is the achievement of adequate perforation quality, often while working with an extremely thin workpiece. In the case of sugar screens, the screen must be thin, both in order that it will fit into the fugal, and in order that the depth of the slots will not be great enough to produce unacceptable drag as the molasses flows through. It is therefore desirable that the thickness of the material used for manufacturing the screen sections for sugar screens be in the region of 200-350 microns. For other applications, the screen may be typically 0.5 to 2mm thick and approximately 1 square metre in area.

Such a thin workpiece must be supported during the laser drilling, and, as will be evident from the description below, it is often necessary to fix the workpiece to the support body to substantially prevent. the workpiece from buckling or warping. In the practice of the present invention, the screen sections are fixed by a layer of adhesive to a support body for which the supporting surface has a low reflectivity to the laser beam. In this way the screen section is continuously supported without the sharp-edged and smooth character of the perforation on the beam-exit side of the screen section being marred by reflected radiation, and buckling of the screen section by the action of the perforation is substantially prevented.

Claim 1 provides a method of perforating a sheet material comprising:
supporting said sheet material on a support surface of a support body;
exposing said sheet material to a laser beam to form perforations in said sheet material, said supporting surface having a reflectivity of less than 20% to said laser beam; and
removing the resultant perforated sheet material from said support body characterised by providing an adhesive layer between the sheet material and the support body to removably fix the sheet material onto the support body and so as substantially to prevent buckling of the sheet material induced by the action of perforation.

Preferably said support surface of the support body has a reflectivity of less than about 10%.

In another embodiment, the reflectivity of the supporting surface to the laser beam is sufficiently low to prevent the perforation geometry being significantly affected by reflected radiation.

The material of the support body preferably has a low absorption coefficient for the laser beam employed to minimize the rise in temperature of the material. The material of the support body may be substantially transparent to the laser beam, with the 0.1mm thickness of the support body adjacent to the supporting surface absorbing less than about 10% of the laser beam. If a highly absorptive material is used problems may thus arise from the consequent heating and perhaps melting of the lips of the perforation by conduction from the support body, or the loss of support due to local vaporization or melting of the support body. A highly absorbing material can of course be used where these disadvantages are tolerated or overcome.

The support body should present a firm supporting surface, and should be compatible with adhesives which may be used to adhere the screen section to it, as described below.

In a preferred embodiment, the support body is also substantially transparent to the visible spectrum to facilitate microscopic examination of the perforations during production.

A suitable material has been found to be an acrylic resin, such as polymethylmethacrylate, which is substantially transparent to many types of laser beams and which has a low reflectivity of approximately 4 to 6% per surface to such laser beams and which if raised to a high temperature by conduction from the workpiece or by heated glue, will depolymerize and ablate cleanly rather than melt against and adhere to the workpiece. However, the method provided is not restricted to the use of acrylic as the support body. Other suitable materials may include polycarbonates, glasses and quartz.

The means, an adhesive, for supporting the sheet on the support body should preferably maintain the sheet in intimate contact with the support body. The adhesive may be provided at the interface between the workpiece and the support body to eliminate voids and provide the intimate contact. The adhesive should have a low reflectivity to the laser beam. Voids have been found to have a deleterious effect on the precision with which the perforations may be formed. The number of voids which is permissible will be dependent on the desired open area of the perforated sheet. It has been found that the intimate contact results in the molten and gaseous material produced by the incidence of the laser beam on the sheet being ejected in a direction away from the support body and that very little material resolidifies in the perforations or on the smooth face of the perforated sheet.

A fundamental problem which must be overcome if satisfactory perforated sheets of thin material are to be manufactured by the method described herein, arises from the tendency of the workpiece sheet progressively to buckle as the making of sucessive perforations proceeds. The tendency of the sheet to buckle can be quite severe in many cases, particularly if the sheet is large and/or the areal density of perforation is high. If not fixed to a support body over much of the area to be perforated, thin workpieces may form ripples or pucker. If fixed to a support body, severe stresses can then be transferred to the support body during the process of perforating, tending to make the support body distort from its preferred flat form. Breakage of the support body may even by induced. The mechanism responsible for the tendency of the sheet to buckle is thought to be thermal expansion in the immediate vicinity of the slots. In any case it is found that, unless suitably prevented, the workpiece progressively distorts to an extent which exceeds the depth of focus which may practically be realized using a laser beam and which may also exceed the ability to control adequate depth of focus via automatically controlled tracking of the lens. (Such tracking by means of a sensor which provides information as to the position of the surface at any instant may be used in the method provided). It will be appreciated that the problem is exacerbated as the number of perforations for a given size of perforated sheet is increased.

This problem for thin workpiece sheets is solved by the invention whereby the workpiece is adhered to the support body by means of an adhesive. The adhesive can be applied over the support body for the entire area that is to be perforated. The use of such an adhesive has the further advantage of taking up small irregularities in the surface of the support body, thereby increasing the flatness of the workpiece during production of the perforations.

The adhesive should provide sufficient bond strength to prevent the sheet separating from the support body during the perforation process and have sufficient shear strength to prevent buckling. The adhesive should preferably either ablate cleanly leaving little or no residue in the perforations or be non-absorbing of the laser beam such that the adhesive is unaffected by the laser beam.

In the case of a stainless steel workpiece and an acrylic support body, a suitable adhesive has been found to be a high strength epoxy resin. For large workpiece sheets, two large fixed rollers with a suitably adjusted gap between them may be used to squeeze the sheet and the support body together.

The method of removal of the workpiece from the support body will of course depend on the materials used. In the case of stainless steel and acrylic with epoxy adhesive, it has been found that the perforated sheet and the support body may be separated by mechanical means simply by peeling or prising apart. Alternatively, the workpiece and the support body may be separated by heating or cooling to affect differential expansion or contraction. For example, it has been found that the use of liquid nitrogen is often advantageous in this respect. The epoxy may subsequently be removed from the stainless steel by immersing it in a tank of a mixture of toluene and ethanol, sold under the registered trade mark "Eposolve-70". The epoxy may be removed from the acrylic by light sandpapering, and the acrylic may then be reused. The ability to re-use the support body, and the fact that only a thin layer of adhesive is required, have important implications for the economy of the techique. It has been found that using these techniques, fugal screen sections can be manufactured which require no post-machining.

### BRIEF DESCRIPTION OF THE DRAWING

Preferred embodiments of the present invention shall now be further described with reference to the accompanying drawings, in which:
Figure 1 is a schematic cross-sectional representation of the method of the present invention; and
Figure 2 is an end view of a preferred method of removing the perforated sheet from the support body.

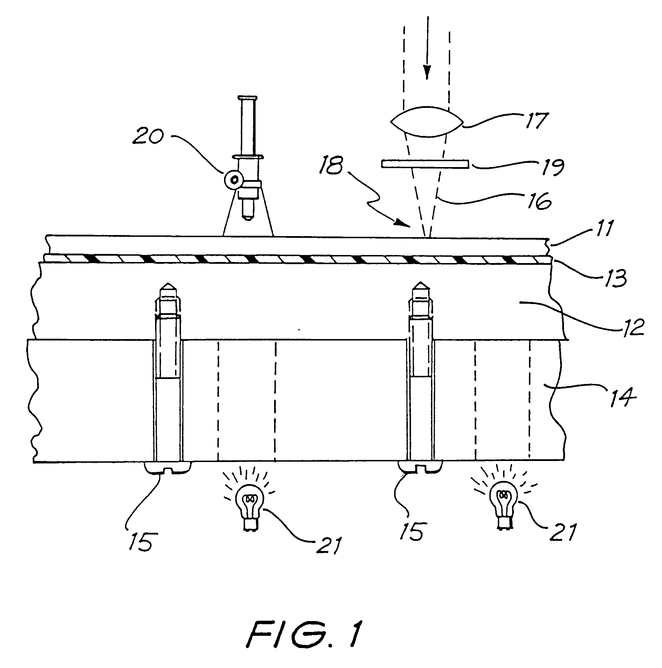

As shown in Figure 1, a sheet material (11) to be perforated is attached to a laser-transparent support body (12) by a layer of adhesive (13). The support body is in turn supported by an added support body (14) and the assembly is mounted on a work table (not shown) for controlled translation in the plane of the sheet material (11). The support body may be attached to the added support body by means of bolts (15) which pass through the added support body into threaded, blind holes in the support body.

The added support body need not be non -reflective of the laser beam and may be made of a metal such as aluminium as the laser beam (16) has its focal point near the sheet material and the beam diverges past the focal point. Providing a reasonable thickness of support body, for example 10mm, is interposed between the sheet material and the added support body, any radiation reflected from the added support body will be of quite low intensity. The added support body may not be required for applications where the tendency to buckle the sheet and the support body is low, or a thicker support body may be used to eliminate the need for the added support body. Alternative means of attaching the support body to the added support body may be used.

A laser beam (16) is directed onto the sheet material by beam-focussing optics (17), and the sheet moves with respect to the beam in order to perforate the sheet. The material removed from the sheet by the laser beam is blown clear of the path of the laser beam by a gas jet (18) and the optics are protected by a sacrificial plate (19) which is substantially transparent to the laser beam and which is periodically replaced.

The support body and adhesive are preferably substantially transparent to visible wavelengths and the perforated sheet may be inspected by microscope (20), with a light source (21) being located below the support body.

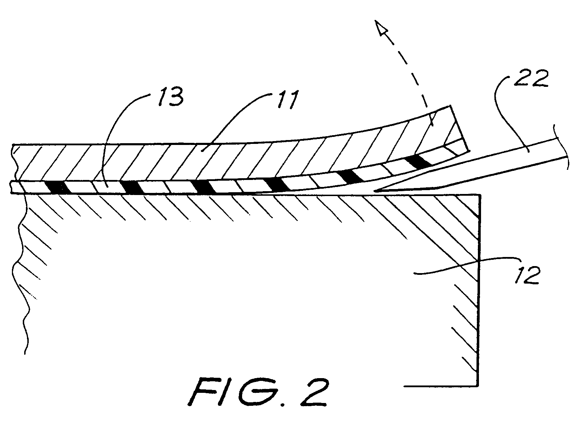

As illustrated in Figure 2, the perforated sheet (11) may be simply removed from the support body (12) by inserting a knife edge (22) and peeling apart.

Screens having circular or rectangular perforations have been produced using the method of this invention, and other shapes may be used by suitable adjustment of the beam optics.

As has been discussed above, in the case of sugar fugal screens it is necessary that the slots taper outwardly from the working side of the screen to the molasses exit side, and it is therefore necessary to produce this taper with the laser beam. This can conveniently be achieved if the laser beam is directed at the molasses exit side of the screen material, and the laser beam parameters are adjusted appropriately using existing techniques.

While the preferred material for the screen is stainless steel of suitable composition, there may be applications where titanium or other metals, or non-metallic materials, may be preferred.

## Claims

1. A method of perforating a sheet material (11) comprising supporting said sheet material (11) on a supporting surface of a support body (12); exposing said sheet material (11) to a laser beam (16) to form perforations in said sheet material (11), said supporting surface having a reflectivity of less than 20% to said laser beam (16); and removing the resultant perforated sheet material (11) from said support body (12); characterised by providing an adhesive layer (13) between the sheet material (11) and the support body (12) to removably fix the sheet material (11) onto the support body (12) and so as substantially to prevent buckling of the sheet material (11) induced by the action of perforation.

2. A method according to Claim 1 wherein the material of the adhesive layer (13) is capable of filling voids between the sheet material (11) and the support body (12).

3. A method according to Claim 1 wherein said adhesive is an epoxy resin.

4. A method according to Claim 1 wherein said supporting surface of the support body (12) has a reflectivity of less than about 10% to the laser beam (16).

5. A method according to Claim 1 wherein the reflectivity of said supporting surface of the support body (12) to the laser beam (16) is sufficiently low to prevent perforation geometry being significantly affected by reflected radiation.

6. A method according to Claim 1 wherein the absorption coefficient of the material of the support body (12) for the laser beam (16) employed is sufficiently low that the temperature of the support body (12) adjacent the sheet material (11) does not rise to a temperature sufficient to affect the edges of the perforations or sufficient to cause vaporization of the material of the support body (12).

7. A method according to Claim 1 wherein a 0.1mm thickness of the support body (12) adjacent to said supporting surface absorbs less than about 10% of the laser beam (16) which is transmitted through the supporting surface.

8. A method according to Claim 1 wherein said support body (12) is substantially transparent to visible wavelength radiation to facilitate visual examination of the perforated sheet.

9. A method according to any preceding claim wherein said support body (12) is formed from an acrylic resin or polycarbonate or glass or quartz.

10. A method according to Claim 9 wherein said support body (12) is formed from polymethylmethacrylate.

11. A method according to any preceding claim wherein the perforated sheet material is removed from the support body (12) by mechanical separation.

12. A method according to any preceding claim wherein the perforated sheet material is removed from the support body (12) by heating or cooling the support body (12) and sheet material (11) to affect differential expansion or contraction of the support body (12) and the sheet material (11).

13. A method according to Claim 1, further comprising reusing said support body (12) by subsequently removably fixing a further sheet material (11) to said supporting surface and repeating the perforating and removal steps with respect to said further sheet material (11).

## Patentansprüche

1. Methode zur Perforierung eines Plattenmaterials (11), wobei die Methode das Abstützen des genannten Plattenmaterials (11) auf einer Ablageoberfläche eines Stützkörpers (12), die Bearbeitung des genannten Plattenmaterials (11) durch einen Laserstrahl (16), um so im genannten Plattenmaterial (11) Perforierungen auszubilden, wobei die genannte Ablageoberfläche ein Reflexionsvermögen von weniger als 20% gegenüber dem genannten Laserstrahl (16) aufweist, sowie das Entfernen des entstandenen perforierten Plattenmaterials (11) vom genannten Stützkörper (12) umfaßt, dadurch gekennzeichnet, daß eine Haftschicht (13) zwischen dem Plattenmaterial (11) und dem Stützkörper (12) vorgesehen ist, um so das Plattenmaterial (11) in entfernbarer Weise auf dem Stützkörper (12) zu fixieren und im wesentlichen jegliches Verziehen des Plattenmaterials (11), das durch den Perforierungsvorgang bewirkt werden könnte, zu unterbinden.

2. Methode nach Anspruch 1, wobei das Material der Haftschicht (13) in der Lage ist, Hohlräume zwischen dem Plattenmaterial (11) und dem Stützkörper (12) auszufüllen.

3. Methode nach Anspruch 1, wobei es sich bei dem genannten Haftmittel um Epoxidharz handelt.

4. Methode nach Anspruch 1, wobei die genannte Ablageoberfläche des Stützkörpers (12) ein Reflexionsvermögen von weniger als etwa 10% gegenüber dem Laserstrahl (16) aufweist.

5. Methode nach Anspruch 1, wobei das Reflexionsvermögen der genannten Ablageoberfläche des Stützkörpers (12) gegenüber dem Laserstrahl (16) ausreichend gering ist, um so eine wesentliche Beeinträchtigung der Perforationsgeometrie durch reflektierte Strahlung zu unterbinden.

6. Methode nach Anspruch 1, wobei der Absorptionskoeffizient des Materials des Stützkörpers (12) gegenüber dem eingesetzten Laserstrahl (16) ausreichend niedrig ist, um so zu verhindern, daß die Temperatur des Stützkörpers (12) in der Nähe des Plattenmaterials (11) auf eine Temperatur ansteigt, die die Kanten der Perforierungen beeinträchtigen oder ein Verdampfen des Materials des Stützkörpers (12) bewirken könnte.

7. Methode nach Anspruch 1, wobei eine Dicke von 0,1 mm des Stützkörpers (12) in der Nähe der genannten Ablageoberfläche weniger als etwa 10% des Laserstrahles (16) absorbiert, der durch die Ablageoberfläche übertragen wird.

8. Methode nach Anspruch 1, wobei der genannte Stützkörper (12) im wesentlichen transparent gegenüber einer Strahlung von sichtbarer Wellenlänge ist, um so eine Sichtprüfung der perforierten Platte zu erleichtern.

9. Methode nach einem der vorstehenden Ansprüche, wobei der genannte Stützkörper (12) aus einem Acrylharz oder Polycarbonat oder Glas oder Quarz besteht.

10. Methode nach Anspruch 9, wobei der genannte Stützkörper (12) aus Polymethylmethacrylat besteht.

11. Methode nach einem der vorstehenden Ansprüche, wobei das perforierte Plattenmaterial durch mechanische Trennung vom Stützkörper (12) entfernt wird.

12. Methode nach einem der vorstehenden Ansprüche, wobei das perforierte Plattenmaterial dadurch vom Stützkörper (12) entfernt wird, daß der Stützkörper (12) und das Plattenmaterial (11) erwärmt oder gekühlt werden, um so ein unterschiedliches Ausdehnen oder Zusammenziehen des Stützkörpers (12) und des Plattenmaterials (11) zu bewirken.

13. Methode nach Anspruch 1, wobei die Methode weiterhin die Wiederverwendung des genannten Stützkörpers (12) in der Weise umfaßt, daß anschließend in entfernbarer Weise ein weiteres Plattenmaterial (11) auf der genannten Ablageoberfläche fixiert wird und die Schritte des Perforierens und Entfernens in bezug auf das genannte weitere Plattenmaterial (11) wiederholt werden.

## Revendications

1. Procédé de perforation d'un matériau en feuille (11) consistant à supporter ledit matériau en feuille (11) sur une surface de support d'un corps de support (12); à exposer ledit matériau en feuille (11) à un faisceau laser (16) pour former des perforations dans ledit matériau en feuille (11), ladite surface de support ayant un pouvoir de réflexion dudit faisceau laser (16) de moins de 20 %; et à retirer le matériau en feuille (11) résultant perforé dudit corps de support (12); caractérisé par l'apport d'une couche adhésive (13) entre le matériau en feuille (11) et le corps de support (12) pour fixer de manière détachable le matériau en feuille (11) sur le corps de support (12) et ainsi empêcher substantiellement le gondolage du matériau en feuille (11), provoqué par l'action de perforation.

2. Procédé selon la revendication 1, caractérisé en ce que le matériau de la couche adhésive (13) est capable de remplir les vides entre le matériau en feuille (11) et le corps de support (12).

3. Procédé selon la revendication 1, caractérisé en ce que ledit adhésif est une résine époxy.

4. Procédé selon la revendication 1, caractérisé en ce que ladite surface de support du corps de support (12) a un pouvoir de réflexion du faisceau laser (16) de moins de 10 % environ.

5. Procédé selon la revendication 1, caractérisé en ce que le pouvoir de réflexion du faisceau laser (16) de ladite surface de support du corps de support (12) est suffisamment faible pour empêcher la géométrie de perforation d'être affectée considérablement par le rayonnement réfléchi.

6. Procédé selon la revendication 1, caractérisé en ce que le coefficient d'absorption du faisceau laser utilisé (16), par le matériau du corps de support (12), est suffisamment faible pour que la température du corps de support (12) adjacent au matériau en feuille (11) n'atteigne pas une température suffisamment élevée pour altérer les bords des perforations, ou suffisamment élevée pour provoquer l'évaporation du matériau du corps de support (12).

7. Procédé selon la revendication 1, caractérisé en ce qu'une épaisseur de 0,1 mm du corps de support (12) adjacent à ladite surface de support absorbe moins de 10 % environ du faisceau laser (16) transmis à travers la surface de support.

8. Procédé selon la revendication 1, caractérisé en ce que ledit corps de support (12) est substantiellement transparent aux rayonnements de longueurs d'ondes visibles afin de faciliter l'examen visuel de la feuille perforée.

9. Procédé selon l'une quelconque des revendications précédentes, caractérisé en ce que ledit corps de support (12) est constitué d'une résine acrylique ou d'un polycarbonate ou de verre ou de quartz.

10. Procédé selon la revendication 9, caractérisé en ce que ledit corps de support (12) est constitué de polyméthacrylate de méthyle.

11. Procédé selon l'une quelconque des revendications précédentes, caractérisé en ce que le matériau en feuille perforé est retiré du corps de support (12) par séparation mécanique.

12. Procédé selon l'une quelconque des revendications précédentes, caractérisé en ce que le matériau en feuille perforé est retiré du corps de support (12) par chauffage ou par refroidissement du corps de support (12) et du matériau en feuille (11) pour affecter la dilatation ou la contraction différentielles du corps de support (12) et du matériau en feuille (11).

13. Procédé selon la revendication 1, consistant en outre à réutiliser ledit corps de support (12) en fixant ensuite de manière détachable un autre matériau en feuille (11) à ladite surface de support et en répétant les étapes de perforation et de retrait dudit autre matériau en feuille (11).
